# FASCICULE DE BREVET EUROPEEN

(11) **EP 1 110 012 B1**
(45) Date de publication et mention de la délivrance du brevet: **03.09.2003**
(21) Numéro de dépôt: 00925414.5
(22) Date de dépôt: 05.05.2000
(51) Int. Cl.: F16H 45/02

(54) **APPAREIL D'ACCOUPLEMENT HYDROCINETIQUE D'ENCOMBREMENT REDUIT, NOTAMMENT POUR VEHICULE AUTOMOBILE**
RAUMSPARENDER, HYDRODYNAMISCHER DREHMOMENTWANDLER, INSBESONDERE FÜR KRAFTFAHRZEUGE
HYDROKINETIC COUPLING APPARATUS WITH REDUCED SPACE REQUIREMENT, IN PARTICULAR FOR MOTOR VEHICLE

(30) Priorité: 05.05.1999 FR 9905723
(43) Date de publication de la demande: 27.06.2001
(73) Titulaire: VALEO EMBRAYAGES s.a.s., 80009 Amiens Cedex 1 (FR)
(72) Inventeur: CHASSEGUET, Gustave, F-95150 Taverny (FR); COSSONNIERE, Philippe, F-78350 Jouy-en-Josas (FR); SAUVAGE, Frédéric, F-94270 Le Kremlin Bicetre (FR)
(74) Mandataire: Lemaire, Marc
(86) Numéro de dépôt international: FR0001239
(87) Numéro de publication internationale: WO00068600

(56) Documents cités:
- EP-A- 0 586 304
- EP-A- 0 732 527
- FR-A- 2 535 002
- FR-A- 2 695 975
- FR-A- 2 736 982
- PATENT ABSTRACTS OF JAPAN vol. 1998, no. 01, 30 janvier 1998 (1998-01-30) & JP 09 236173 A (TOYOTA MOTOR CORP), 9 septembre 1997 (1997-09-09) & JP 09 236173 A (TOYOTA) 9 septembre 1997 (1997-09-09)

## Description

La présente invention concerne un appareil d'accouplement hydrocinétique, notamment pour véhicule automobile, du type décrit et représenté par exemple dans le document WO-A-93/13339.

Ce document décrit et représente un appareil d'accouplement hydrocinétique, notamment pour véhicule automobile, du type comportant :
- un carter doté d'une paroi, globalement d'orientation radiale, propre à être liée en rotation à un arbre menant ;
- une roue de turbine liée en rotation à un moyeu propre à être lié en rotation à un arbre mené ; et
- un embrayage de verrouillage, intervenant entre la roue de turbine et la paroi radiale, qui comporte notamment un voile, solidaire en rotation et distinct du moyeu, en forme d'anneau d'orientation globalement radiale, des moyens de friction coopérant avec la paroi et des organes élastiques à action circonférentielle intervenant directement ou indirectement entre le voile et les moyens de friction.

Dans le mode de réalisation illustré dans ce document, la roue de turbine est fixée, par l'intermédiaire d'une portion radialement interne globalement en forme d'anneau plat de l'enveloppe extérieure de la roue de turbine qui soutient les pales de la turbine, directement à un flasque d'orientation radiale du moyeu, de la même manière que la portion radialement intérieure du voile, ces deux éléments pouvant être fixés ensemble au flasque du moyeu par l'intermédiaire de rivets communs.

Une telle conception a pour inconvénient d'augmenter l'encombrement axial global de la liaison entre la roue de turbine et le moyeu et elle limite de plus les possibilités de conception et de positionnement de la roue de turbine et du moyeu.

Dans le document FR-A-2 695 975, il est décrit un contre-piston 31 servant de piste de frottement au disque de friction. Cette configuration ne permet pas de réduire l'encombrement axial puisque de part sa fonction le contre-piston est soumis à des efforts mécaniques axiaux du piston et ne peut en aucun cas avoir une faible épaisseur, et un tel contre-piston ne constitue pas un voile au sens de la présente invention.

Dans le document EP-A-0 732 527 qui comporte les caractéristiques du préambule de la revendicaiton 1, il est décrit une roue de turbine qui est rivetée sur un élément de transmission. La roue de turbine et l'élément de transmission sont liés en rotation avec un voile de transmission qui est riveté sur un moyeu propre à être lié en rotation avec un arbre mené. Des organes élastiques à action circonférentielle sont interposés entre l'élément de transmission et le voile de transmission. Cette configuration ne permet pas non plus de réduire l'encombrement axial, et elle nécessite un nombre de pièces important.

Afin de remédier à ces inconvénients, l'invention propose un appareil d'accouplement hydrocinétique tel que défini par la revendication 1.

Grâce à l'invention les ressorts, d'une manière générale des organes élastiques à action circonférentielle, que comporte l'amortisseur de torsion comprenant le voile, peuvent être implantés sur une circonférence de grand diamètre ce qui permet de transmettre un couple important et/ou d'augmenter le débattement angulaire relatif entre le disque de friction et le voile au bénéfice d'une meilleure filtration des vibrations:

Selon d'autres caractéristiques de l'invention :
- le voile comporte une portion de fixation conformée de manière à épouser sensiblement le contour de la portion en vis-à-vis de la roue de turbine pour constituer une zone de fixation de la roue de turbine sur ladite portion de fixation du voile ;
- la roue de turbine est fixée à ladite portion de fixation du voile par soudage ;
- la roue de turbine est fixée à ladite portion de fixation du voile par rivetage ;
- la roue de turbine est fixée à ladite portion de fixation du voile par sertissage ;
- la roue de turbine comporte des pales qui comportent des pattes pour le sertissage de la roue de turbine sur ladite portion de fixation du voile
- le voile comporte une partie périphérique intérieure en forme d'anneau plat dont le bord radial intérieur est fixé adjacent axialement contre un flasque, d'orientation radiale, du moyeu ;
- le bord radial intérieur du voile est reçu dans un lamage formé dans la face radiale arrière du bord radial extérieur du flasque du moyeu ;
- l'enveloppe de la roue de turbine, en forme générale de coquille, s'étend radialement et axialement au-delà du bord périphérique intérieur des pales soutenues par la coquille ;
- le voile comporte à sa périphérie intérieure un anneau plat fixé à un flasque d'orientation radiale appartenant au moyeu, le voile (94) comportant d'une part à sa périphérie externe une portion annulaire périphérique pour recevoir les ressorts et, d'autre part une portion intermédiaire pour fixation de la roue de turbine ;
- la roue de turbine a une forme générale fuselée ou ovoïde ;
- les moyens de friction sont constitués par un disque dont chacune des faces est prévue pour coopérer avec la paroi et un piston, solidaire de ladite paroi.

Ainsi qu'il ressort à l'évidence de toutes ces caractéristiques, avantageusement la roue de turbine est fixée sur une portion intermédiaire du voile en sorte qu'elle est suspendue à celui-ci, un jeu existant entre la roue de turbine et le flasque solidaire du moyeu.

Toutes ces dispositions permettent de réduire la matière nécessaire pour réaliser la roue de turbine fixée au delà de sa périphérie interne sur la portion intermédiaire du voile.

D'autres caractéristiques et avantages de l'invention apparaîtront à la lecture de la description détaillée qui va suivre pour la compréhension de laquelle on se reportera aux dessins annexés dans lesquels :
- la figure 1 est demi-vue en section axiale d'un premier mode de réalisation d'un appareil d'accouplement conforme aux enseignements de l'invention avec son piston représenté en position dite "pontée" ;
- la figure 2 est une vue similaire à celle de la figure 1 qui illustre une variante de réalisation de la forme de la roue de turbine ;
- et la figure 3 est une vue similaire à celle de la figure 1 qui illustre une variante de réalisation des moyens de fixation de la roue de turbine au voile.

Dans la description qui va suivre, des composants identiques similaires ou analogues seront désignés par les mêmes chiffres de référence.

Pour faciliter la lecture de la description et des revendications, les termes avant, arrière, supérieur, inférieur, vertical, horizontal, etc., seront utilisés à titre non limitatif et en référence aux figures.

On a représenté sur les figures un appareil d'accouplement hydrocinétique 10, notamment pour une transmission de véhicule automobile, du type comportant un carter 12 dont l'une des coquilles comporte une paroi radiale 14 qui s'étend dans un plan perpendiculaire à l'axe général X-X du dispositif d'accouplement 10.

La paroi radiale 14 est réalisée venue de matière en une seule pièce en tôle d'épaisseur sensiblement constante et emboutie et elle se prolonge, au-delà de son bord radial extérieur, par une portion d'orientation axiale 16 en forme de jupe cylindrique dont le bord d'extrémité libre avant 18 est conçu pour permettre la liaison de cette coquille 12 avec l'autre coquille 13 du carter.

A sa partie centrale, la paroi radiale 14 comporte un manchon central 20 qui permet d'assurer la fixation et la liaison en rotation de la paroi radiale 14 à un 5 arbre menant (non représenté sur la figure).

Le manchon s'étend axialement vers l'arrière à partir d'une portion centrale 22 de la paroi radiale 14 qui est décalée axialement vers l'avant par rapport au plan radial médian dans lequel s'étend la paroi 14.

Le bord d'extrémité libre annulaire arrière 24 du manchon 20 est soudé à la partie arrière de plus petit diamètre 26 d'une bague étagée de poussée 28 qui se prolonge axialement vers l'arrière, à l'extérieur du carter 12, par un tronçon cylindrique d'extrémité arrière 30 prévu pour être relié à l'arbre menant.

La partie avant 32 de plus grand diamètre de la bague de poussée 28 s'étend axialement à l'intérieur du carter 12 et radialement en partie en vis-à-vis de la face interne avant 34 de la portion centrale 22 de la paroi 14.

La partie avant 32 de la bague de poussée 28 délimite une surface annulaire cylindrique 36 qui constitue une portée de guidage en coulissement d'une virole radiale intérieure 38 appartenant à un piston 40.

La surface de portée 36 comporte une gorge radiale 42 qui est prévue pour recevoir un joint d'étanchéité (non représenté).

A partir de sa face arrière 44, d'orientation radiale, la partie de grand diamètre 32 de la bague de poussée 28 comporte une série d'ergots 46, d'orientation axiale, qui sont répartis angulairement de manière régulière et qui déterminent, avec la face 34 de la partie centrale 22 de la paroi radiale 14, autant de passages d'orientation radiale qui mettent en communication une chambre intérieure 48 avec un ou plusieurs canaux 50 qui traversent la partie cylindrique avant de plus petit diamètre 26 de la bague de poussée 28, pour faire communiquer la chambre 48 avec l'intérieur de la bague de poussée 28 qui est fermée axialement vers l'avant par le tronçon cylindrique 30 et qui débouche axialement vers l'arrière à l'intérieur du corps 52 en forme de douille cylindrique creuse appartenant à un moyeu 54 qui est cannelé intérieurement 56 pour permettre sa liaison en rotation avec un arbre mené 55.

Le moyeu 54 est coaxial aux autres éléments de l'appareil 10, et notamment à la bague de poussée 28, et il se prolonge radialement vers l'extérieur, à partir de la portion d'extrémité arrière de sa douille 52, par un flasque 60 d'orientation radiale.

Une pièce 62 est rapportée sur le flasque 60 pour constituer une pièce d'appui axial d'une part pour la face radiale avant de la partie avant 32 de la bague de poussée 28 et, d'autre part, pour 1a face annulaire d'extrémité avant de la virole 38 de guidage en coulissement du piston 40.

A cet effet, la pièce 62 est constituée pour l'essentiel par une plaque en forme d'anneau plat.

La face annulaire plane arrière de la plaque 62 constitue une face d'appui pour la virole 38 et pour la face radiale avant de la bague 28.

La plaque 62 forme aussi entretoise entre le flasque 60 et le piston 40, c'est-à-dire que, en position dépontée du piston 40, il existe un jeu axial entre 1a face annulaire avant en vis-à-vis de la partie radiale intérieure du piston 40 et la face annulaire en vis-à-vis du flasque 60.

La partie centrale principale du flasque 60 se prolonge radialement vers l'extérieur par un bord radial extérieur 86, d'épaisseur axiale plus importante, qui comporte un lamage annulaire 88 formé dans la face radiale arrière 90 du flasque 60.

Le fond radial du lamage 88 constitue une surface d'appui axial vers l'arrière pour un bord radial intérieur annulaire plat et d'orientation radiale 92 appartenant à la partie périphérique intérieure en forme d'anneau plat 106 d'un voile 94.

Ce bord radial intérieur 92 est fixé au bord 86 du flasque 60 par une série de rivets 95 dont chacun traverse un trou formé dans le bord 86 du flasque 60 et un trou correspondant formé dans le bord radial intérieur 92 du voile 94.

Dans la conception selon l'état de la technique évoquée précédemment (non représentée sur les figures), chaque rivet 95 traverse aussi un trou formé dans une partie radialement intérieure en forme de bord ou d'anneau plat appartenant à l'enveloppe 103, en forme générale de coquille, qui soutient les pales 113 de la roue de turbine 104.

A partir de son bord radial intérieur 92, le voile 94 comporte, radialement vers l'extérieur, un coude 108 puis une portion intermédiaire 110, ici sensiblement centrale radialement, en forme d'anneau plat de manière à épouser sensiblement le contour de la portion en vis-à-vis 105 de la roue de turbine 104, puis par une portion 112 de forme générale tronconique, et par une portion annulaire périphérique extérieure 114.

La portion annulaire 114 est conformée globalement en une gorge d'orientation axiale qui est ouverte axialement vers l'arrière en direction de la paroi radiale 14.

Comme on peut le voir sur les figures, sur lesquelles la portion annulaire 114 est illustrée en section axiale, elle comporte une partie annulaire extérieure 116 d'orientation axiale qui s'étend axialement vers l'arrière à partir d'une partie avant en forme d'anneau plat 118 qui s'étend dans un plan radial et qui est reliée au bord périphérique extérieur de la portion tronconique 112 par une partie annulaire intérieure 120 d'orientation globalement axiale.

En section, la portion annulaire périphérique 114, présente un profil en C ou en U couché, et elle reçoit une série de ressorts à boudin 122 à action circonférentielle, qui interviennent sur une même circonférence et dont le diamètre extérieur est légèrement inférieur à la hauteur verticale de la gorge 114.

En variante, notamment pour une application du type monoface, les pattes (122) peuvent être solidaire de la périphérie externe du piston (40) destiné à venir frotter de manière directe ou indirecte contre la paroi (14) du carter (12).

Ainsi qu'on l'aura compris l'invention s'applique aussi bien à une transmission du type monoface ou biface (multidisque), dans le cas d'une réalisation monoface le piston (40) est serré directement contre la paroi (14) du carter avec interposition ou non d'une garniture de friction sur l'un ou l'autre, les pattes (122) pouvant être réalisées à la périphérie externe du piston (40). Dans le cas d'une application multidisque, plus particulièrement biface, les pattes (122) sont portées par un disque (152) interposé entre le piston (40) et la paroi (14) et destiné à être serré entre ces deux éléments, des garnitures de friction peuvent être utilisées et rapportées soit sur les faces du disque (152), soit en vis à vis de ces faces sur la paroi (14) et le piston (40).

Selon un principe connu et par exemple décrit dans la demande de brevet français FR-A-9802808, les ressorts 122 sont ainsi guidés circonférentiellement et son retenus axialement vers l'arrière par la partie 118.

Les ressorts 122 interviennent entre le voile 94 et un disque de friction 152 et appartiennent à un amortisseur de torsion constitué par l'ensemble voile (94) - ressort (122) - disque de friction (152). A cet effet, la portion annulaire 114 comporte des zones d'appui qui sont des surfaces d'appui circonférentiel constituées par les extrémités circonférentielles d'emboutis qui sont formés radialement vers l'intérieur, respectivement vers l'extérieur, dans les parties annulaires extérieure 116 et intérieure 120.

Le disque 152 est une pièce en forme générale d'anneau plat.

Il est constitué par un corps ou partie centrale 154 en forme d'anneau plat dont les faces planes annulaires et opposées, arrière et avant, portent chacune respectivement une garniture annulaire de frottement arrière 160 et avant 162.

La garniture arrière de frottement 160 du disque de friction 152 est prévue pour coopérer avec une piste annulaire de frottement 170 qui est formée en vis-à-vis dans la face intérieure de la paroi radiale 14.

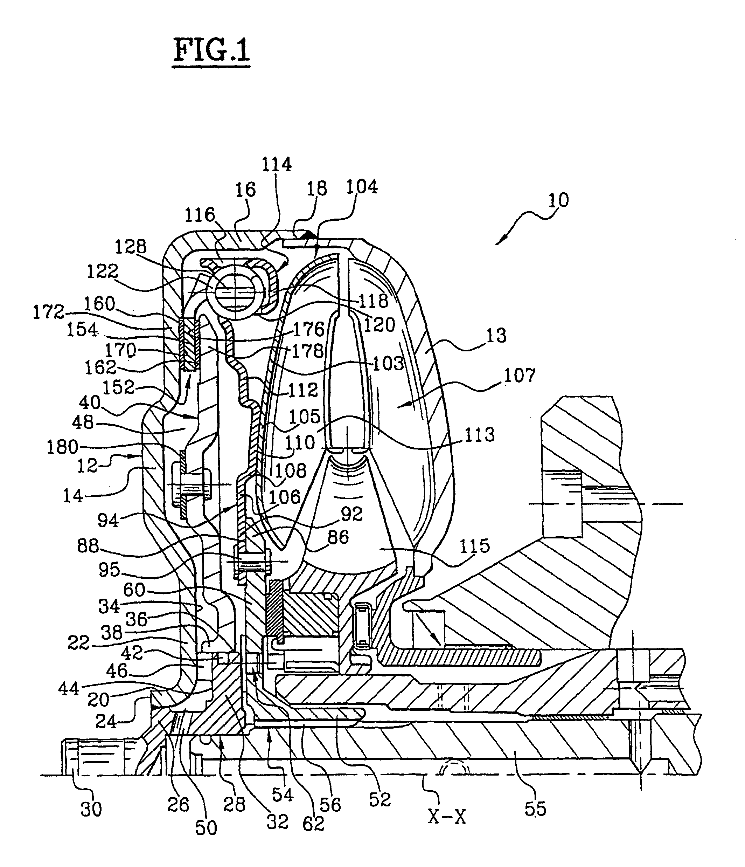

Plus précisément, la piste de frottement 170 est usinée dans la face intérieure d'une portion médiane 172 de la paroi radiale 14 qui est réalisée, à la faveur d'un embouti axial annulaire, de manière à s'étendre dans un plan vertical décalé axialement vers l'avant, c'est-à-dire vers la gauche en considérant la figure 1, par rapport au plan vertical médian dans lequel s'étend la paroi radiale 14.

La garniture de frottement avant 162 est prévue pour coopérer avec une piste annulaire de frottement 176, orientée axialement vers l'arrière, qui est formée sur la face correspondante de la partie périphérique annulaire extérieure 178 du piston 40.

Le piston 40 est lié en rotation à la paroi radiale 14 par des moyens autorisant un déplacement axial relatif entre le piston (40) et la paroi (14), ces moyens consistent ici en une série de languettes axialement élastiques 180 agencées sensiblement selon une circonférence et qui interviennent tangentiellement entre le couvercle 12 et le piston 14 tout en autorisant un déplacement axial relatif de ces deux éléments.

Ces moyens peuvent consister en une liaison du type tenon - mortaise ou encore tout autre mode de liaison par coopération de forme tel que des pions pénétrant dans des trous.

Comme on peut le voir aux figures, la portion annulaire 114 comporte à sa périphérie extérieure des pattes d'entraînement 128 qui s'étendent axialement vers l'avant en direction de la portion annulaire 114, sensiblement à mi-hauteur entre les parties annulaires 116 et 120.

Les pattes d'entraînement 128 sont réparties angulairement de manière régulière et chacune d'elles est reliée au bord périphérique extérieur du disque de friction 152 par un coude de raccordement à angle droit.

Après le montage, il demeure une possibilité de déplacement axial relatif du disque 152 par rapport au voile 94.

En variante, la structure pourrait être inversée tant en monoface qu'en biface et ainsi la portion (114) qui retient les organes élastiques à action circonférentielle ou ressorts (122), peut appartenir au disque (152) ou au piston (40), les pattes (128) étant alors issues ou rapportées sur le voile (94).

Pour mémoire, on rappellera que 1a roue de turbine 104 est entraînée par une roue d'impulseur 107, grâce à la circulation de fluide contenu dans le carter et que, après démarrage du véhicule, l'embrayage de verrouillage permet, pour éviter les phénomènes de glissement entre les roues de turbine et d'impulseur, une solidarisation de l'arbre mené 55 relié à la roue de turbine 104, avec l'arbre menant relié à la paroi radiale 14 du carter.

L'embrayage de verrouillage intervient ainsi entre la roue de turbine et la paroi radiale. Il coulisse par son piston 40 sur la bague de poussée 28 solidaire de la paroi radiale 14. La commande du serrage et du desserrage de l'embrayage est assurée, selon une technique connue, par l'alimentation en fluide de la chambre 48 délimitée axialement par le piston 40 et la paroi radiale 14 et radialement vers l'intérieur par la bague de poussée 28 et vers l'extérieur par le disque de friction.

Conformément aux enseignements de l'invention, la roue de turbine 104 est liée en rotation au voile 94 auquel elle est par exemple, selon la conception illustrée aux figures, fixée par soudage de la portion de fixation 105 de son enveloppe 103 à la partie 110 du voile 94, ce dernier étant solidaire en rotation du flasque 60 du moyeu 54. Ainsi, la roue de turbine 104 est d'une conception simplifiée par rapport à l'état de la technique dans la mesure où elle ne comporte aucune partie de son enveloppe pour sa liaison en rotation au moyeu 54, 60, un jeu radial existant entre la roue 104 et la périphérie externe du flasque 60 chanfreinée pour réduire encore l'encombrement axial et ne pas interférer avec la roue 104.

Dans l'exemple illustré aux figures, le convertisseur hydraulique est du type "étroit" ou "extra plat", c'est-à-dire que les roues de turbine 104 et d'impulseur 107 sont de forme générale fuselée ou ovoïde de manière à réduire l'encombrement axial global du dispositif d'accouplement.

Comme on peut le voir sur les figures, la conception selon l'invention participe à cette réduction de l'encombrement axial dans la mesure où il est possible d'agencer la partie périphérique intérieure 92 du voile 94 d'un côté, ici arrière, de la partie périphérique extérieure 86 du flasque 60, tandis que la partie radialement la plus intérieure de la roue de turbine 104 est adjacente à la face radiale avant chanfreinée de la périphérie 92 du flasque 60.

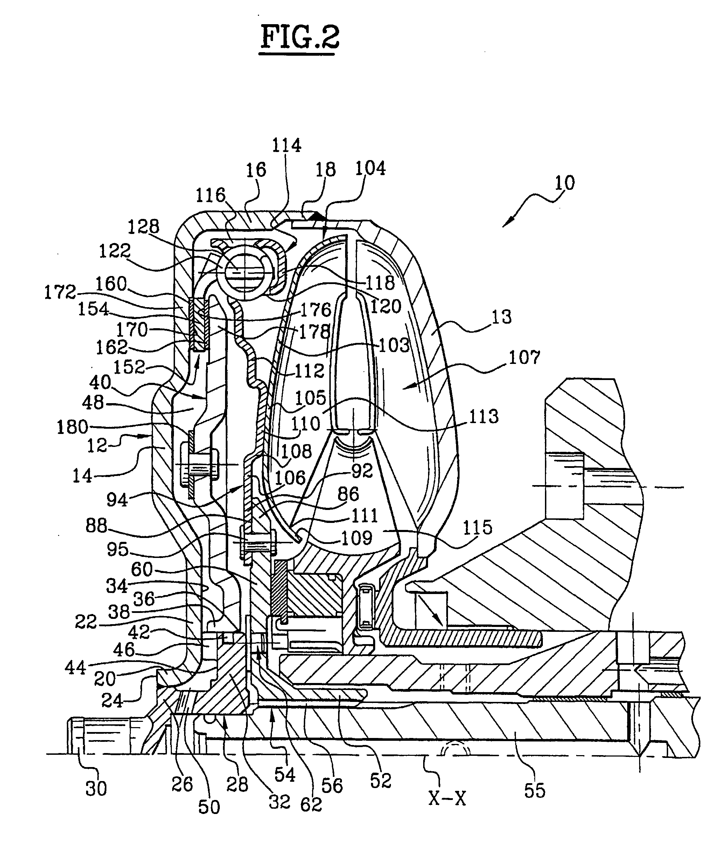

Dans la variante de réalisation illustrée à la figure 2, on voit que la conception selon l'invention permet de profiter de l'espace disponible, axialement et radialement vers l'intérieur, et de l'absence de partie radialement intérieure de liaison de la roue de turbine 104 au moyeu 54, 60, pour prolonger la coquille 103 radialement vers l'intérieur et axialement vers l'avant de manière à améliorer le guidage du fluide vers le réacteur 115.

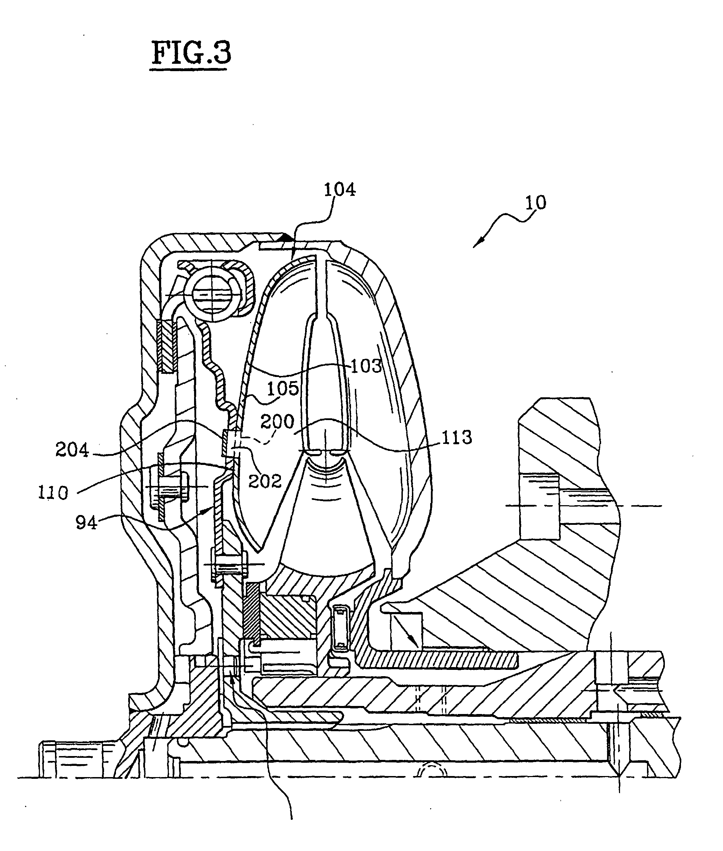

Dans la variante de réalisation illustrée à la figure 3, la roue de turbine 104 est fixée à la partie de fixation 110 du voile 94 par une opération de sertissage. A cet effet, les pales 113 de la roue comportent des pattes 202 qui s'étendent sensiblement axialement vers l'extérieur à travers des fentes complémentaires 200 formées dans la coquille 105 puis à travers des fentes en vis-à-vis formées dans la portion de fixation 110 et qui sont ensuite rabattues tangentiellement de manière que leurs branches d'extrémité 204 assurent le sertissage en serrant axialement en appui mutuel les parties de fixation du voile et de la roue de turbine.

Les pattes 202 assurent ainsi la liaison à rotation entre le voile et les pales, c'est-à-dire entre le voile et la roue de turbine. Cette variante de conceptions permet de s'affranchir de tout autre moyen et opération de fixation, le montage des deux éléments 94 et à 110 s'effectuant en introduisant les pattes 202 à travers les fentes du voile puis en rabattant les extrémités 204. Ce mode de liaison et donc particulièrement simple et fiable du point de vue de la liaison en rotation des deux composants.

Sans sortir du cadre de l'invention, il est possible de fixer directement la portion 105 de l'enveloppe 103 de la turbine 104 à la portion 110 du voile 94 par rivetage, tout en conservant les principaux avantages résultant de la conception selon l'invention.

## Revendications

1. Appareil (10) d'accouplement hydrocinétique, notamment pour véhicule automobile, du type comportant :
- un carter (12) doté d'une paroi (14), globalement d'orientation radiale, propre à être liée en rotation à un arbre menant ;
- une roue de turbine (104) liée en rotation à un moyeu (54) propre à être lié en rotation à un arbre mené ; et
- un embrayage de verrouillage, intervenant entre la roue de turbine (104) et la paroi radiale (14), qui comporte un voile (94), distinct du moyeu et fixé sur le moyeu (54), en forme d'anneau d'orientation globalement radiale, des moyens de friction coopérant avec la paroi (14) et des organes élastiques à action circonférentielle intervenant directement ou indirectement entre le voile (94) et les moyens de friction, **caractérisé en ce que** la roue de turbine (104) est fixée directement sur ledit voile (94), de manière que la roue de turbine (104) soit liée en rotation au moyeu (54) par l'intermédiaire dudit voile (94).

2. Appareil selon la revendication précédente, **caractérisé en ce que** le voile (94) comporte une portion de fixation (110) conformée de manière à épouser sensiblement le contour de la portion en vis-à-vis (105) de la roue de turbine (104) pour constituer une zone de fixation de la roue de turbine sur ladite portion de fixation (110) du voile (94).

3. Appareil selon la revendication précédente, **caractérisé en ce que** la roue de turbine (104, 105) est fixée à ladite portion de fixation (110) du voile (94) par soudage.

4. Appareil selon la revendication 2, **caractérisé en ce que** la roue de turbine (104, 105) est fixée à ladite portion de fixation (110) du voile (94) par rivetage.

5. Appareil selon la revendication 2, **caractérisé en ce que** la roue de turbine (104, 105) est fixée à ladite portion de fixation (110) du voile (94) par sertissage.

6. Appareil selon la revendication 2, **caractérisé en ce que** la roue de turbine (104) comporte des pales (113) qui comportent des pattes (202) pour le sertissage de la roue de turbine (104) sur ladite portion de fixation (110) du voile (94)

7. Appareil selon l'une quelconque des revendications précédentes, **caractérisé en ce que** le voile (94) comporte une partie périphérique intérieure en forme d'anneau plat (106) dont le bord radial intérieur (92) est fixé adjacent axialement contre un flasque (86), d'orientation radiale, du moyeu (28).

8. Appareil selon la revendication précédente, **caractérisé en ce que** le bord radial intérieur (92) du voile (94) est reçu dans un lamage (88) formé dans la face radiale arrière du bord radial extérieur du flasque (86) du moyeu (28).

9. Appareil selon l'une quelconque des revendications précédentes, **caractérisé en ce que** l'enveloppe (103) de la roue de turbine (104), en forme générale de coquille, s'étend radialement et axialement au-delà du bord périphérique intérieur (111) des pales (113) soutenues par la coquille.

10. Appareil selon l'une quelconque des revendications précédentes, **caractérisé en ce que** le voile (94) comporte à sa périphérie intérieure un anneau plat (106) fixé à un flasque d'orientation radiale appartenant au moyeu (54), **en ce que** le voile (94) comporte d'une part à sa périphérie externe une portion annulaire périphérique (114) pour recevoir les ressorts (112) et, d'autre part une portion intermédiaire (110) pour fixation de la roue de turbine (104).

11. Appareil selon l'une quelconque des revendications précédentes, **caractérisé en ce que** la roue de turbine (104) a une forme générale fuselée ou ovoïde.

12. Appareil selon l'une quelconque des revendications précédentes, **caractérisé en ce que** les moyens de friction sont constitués par un disque (152) dont chacune des faces est prévue pour coopérer avec la paroi (14) et un piston (40), solidaire de ladite paroi (14).

## Patentansprüche

1. Hydrodynamischer Momentwandler (10), insbesondere für Kraftfahrzeuge, umfassend:
- ein Gehäuse (12) mit einer insgesamt radial ausgerichteten Wand (14), die drehfest mit einer treibenden Welle verbunden werden kann;
- ein Turbinenrad (104), das drehfest mit einer Nabe (54) verbunden ist, die drehfest mit einer getriebenen Welle verbindbar ist; und
- eine zwischen dem Turbinenrad (104) und der radialen Wand (14) wirksame Überbrückungskupplung, die eine drehfest mit der Nabe (54) verbundene und davon verschiedene Zwischenscheibe (94) in Form eines insgesamt radial ausgerichteten Rings, mit der Wand (14) zusammenwirkende Reibungsmittel und umfangsmäßig wirksame elastische Organe umfasst, die direkt oder indirekt zwischen der Zwischenscheibe (94) und den Reibungsmitteln zum Einsatz kommen,
**dadurch gekennzeichnet, dass** das Turbinenrad (104) direkt auf der Zwischenscheibe (94) befestigt ist, so dass das Turbinenrad (104) unter Vermittlung der Zwischenscheibe (94) drehfest mit der Nabe (54) verbunden ist.

2. Momentwandler nach dem vorangehenden Anspruch, **dadurch gekennzeichnet, dass** die Zwischenscheibe (94) wenigstens einen Befestigungsabschnitt (110) umfasst, der so gestaltet ist, dass er sich in etwa an die Kontur des gegenüberliegenden Abschnitts (105) des Turbinenrads (104) anpasst, um einen Befestigungsbereich zur Befestigung des Turbinenrads an dem besagten Befestigungsabschnitt (110) der Zwischenscheibe (94) zu bilden.

3. Momentwandler nach dem vorangehenden Anspruch, **dadurch gekennzeichnet, dass** das Turbinenrad (104, 105) durch Schweißen an dem Befestigungsabschnitt (110) der Zwischenscheibe (94) befestigt ist.

4. Momentwandler nach Anspruch 2, **dadurch gekennzeichnet, dass** das Turbinenrad (104, 105) durch Aufnieten an dem Befestigungsabschnitt (110) der Zwischenscheibe (94) befestigt ist.

5. Momentwandler nach Anspruch 2, **dadurch gekennzeichnet, dass** das Turbinenrad (104, 105) durch Falzen an dem Befestigungsabschnitt (110) der Zwischenscheibe (94) befestigt ist.

6. Momentwandler nach Anspruch 2, **dadurch gekennzeichnet, dass** das Turbinenrad (104) Schaufeln (113) umfasst, die Ansätze (202) für das Falzen des Turbinenrads (104) an dem besagten Befestigungsabschnitt (110) der Zwischenscheibe (94) aufweisen.

7. Momentwandler nach einem der vorangehenden Ansprüche, **dadurch gekennzeichnet, dass** die Zwischenscheibe (94) einen inneren Umfangsteil in Form eines flachen Rings (106) umfasst, dessen radialer innerer Rand (92) axial anliegend an einem radial ausgerichteten Flansch (86) der Nabe (28) befestigt ist.

8. Momentwandler nach dem vorangehenden Anspruch, **dadurch gekennzeichnet, dass** der radiale innere Rand (92) der Zwischenscheibe (94) in einer Einsenkung (88) aufgenommen ist, die in der hinteren radialen Fläche des äußeren radialen Rands des Flansches (96) der Nabe (28) ausgebildet ist.

9. Momentwandler nach einem der vorangehenden Ansprüche, **dadurch gekennzeichnet, dass** sich die mit der allgemeinen Form einer Schale ausgeführte Umhüllung (103) des Turbinenrads (104) radial und axial jenseits des inneren Umfangsrands (111) der durch die Schale getragenen Schaufeln (113) erstreckt.

10. Momentwandler nach einem der vorangehenden Ansprüche, **dadurch gekennzeichnet, dass** die Zwischenscheibe (94) an ihrem inneren Umfang einen flachen Ring (106) umfasst, der an einem zur Nabe (54) gehörenden radial ausgerichteten Flansch befestigt ist, dass die Zwischenscheibe (94) einerseits an ihrem äußeren Umfang einen ringförmigen Umfangsabschnitt (114) zur Aufnahme der Federn (112) und andererseits einen Zwischenabschnitt (110) zur Befestigung des Turbinenrads (104) umfasst.

11. Momentwandler nach einem der vorangehenden Ansprüche, **dadurch gekennzeichnet, dass** das Turbinenrad (104) eine spindelförmige oder eiförmige Gesamtform hat.

12. Momentwandler nach einem der vorangehenden Ansprüche, **dadurch gekennzeichnet, dass** die Reibungsmittel aus einer Scheibe (152) bestehen, deren Flächen jeweils für das Zusammenwirken mit der Wand (14) und einem fest mit der besagten Wand (14) verbundenen Kolben (40) vorgesehen sind.

## Claims

1. Hydrokinetic coupling apparatus (10), in particular for a motor vehicle, of the type comprising:
- a casing (12) provided with a wall (14) of radial orientation overall, able to be rotationally connected to a driving shaft;
- a turbine wheel (104) rotationally connected to a hub (54) able to be rotationally connected to a driven shaft; and
- a lock-up clutch acting between the turbine wheel (104) and the radial wall (14), which comprises a damper plate (94) distinct from the hub and fixed to the hub (54), in the form of a ring of radial orientation overall, friction means cooperating with the wall (14) and circumferentially acting elastic members acting directly or indirectly between the damper plate (94) and the friction means, **characterised in that** the turbine wheel (104) is directly fixed to the said damper plate (94) so that the turbine wheel (104) is rotationally connected to the hub (54) by means of the said damper plate (94).

2. Apparatus according to the preceding claim, **characterised in that** the damper plate (94) comprises a friction portion (110) formed so as to substantially follow the contour of the facing portion (105) of the turbine wheel (104) in order to constitute an area for fixing the turbine wheel to the said fixing portion (110) of the damper plate (94).

3. Apparatus according to the preceding claim, **characterised in that** the turbine wheel (104, 105) is fixed to the said fixing portion (110) of the damper plate (94) by welding.

4. Apparatus according to Claim 2, **characterised in that** the turbine wheel (104, 105) is fixed to the said fixing portion (110) of the damper plate (94) by riveting.

5. Apparatus according to Claim 2, **characterised in that** the turbine wheel (104, 105) is fixed to the said fixing portion (110) of the damper plate (94) by crimping.

6. Apparatus according to Claim 2, **characterised in that** the turbine wheel (104) comprises blades (113) which comprise lugs (202) for crimping the turbine wheel (104) to the said fixing portion (110) of the damper plate (94).

7. Apparatus according to any one of the preceding claims, **characterised in that** the damper plate (94) comprises an internal peripheral part in the form of a flat ring (106) whose internal radial edge (92) is fixed so as to be axially adjacent against a radially oriented plate (86) on the hub (28).

8. Apparatus according to the preceding claim, **characterised in that** the internal radial edge (92) of the damper plate (94) is received in a countersink (88) formed in the rear radial face of the external radial edge of the plate (86) of the hub (28).

9. Apparatus according to any one of the preceding claims, **characterised in that** the envelope (103) of the turbine wheel (104), in the general form of a shell, extends radially and axially beyond the internal peripheral edge (111) of the blades (113) supported by the shell.

10. Apparatus according to any one of the preceding claims, **characterised in that** the damper plate (94) comprises, at its internal periphery, a flat ring (106) fixed to a radially oriented plate belonging to the hub (54), **in that** the damper plate (94) comprises on the one hand at its external periphery a peripheral annular portion (114) for receiving the springs (112) and on the other hand an intermediate portion (110) for fixing the turbine wheel (104).

11. Apparatus according to any one of the preceding claims, **characterised in that** the turbine wheel (104) has a tapered or ovoid shape overall.

12. Apparatus according to any one of the preceding claims, **characterised in that** the friction means consist of a disc (152), each of whose faces is designed to cooperate with the wall (14) and a piston (40), fixed to the said wall (14).
